(19) Europäisches Patentamt
European Patent Office
Office européen des brevets

(11) Veröffentlichungsnummer: **0 321 001 B1**


(12) **EUROPÄISCHE PATENTSCHRIFT**


(45) Veröffentlichungstag der Patentschrift: **07.10.92**

(51) Int. Cl.5: **G11B 15/10**, G11B 15/02

(21) Anmeldenummer: **88200788.3**

(22) Anmeldetag: **25.04.88**


(54) **Vorrichtung zum Verstellen eines Funktionsteiles in einem elektrischen Gerät und Elektromagnetvorrichtung geeignet zum Einsatz bei dieser Vorrichtung.**


(30) Priorität: **17.12.87 DE 3742736**

(43) Veröffentlichungstag der Anmeldung:
**21.06.89 Patentblatt 89/25**

(45) Bekanntmachung des Hinweises auf die Patenterteilung:
**07.10.92 Patentblatt 92/41**

(84) Benannte Vertragsstaaten:
**DE FR GB IT**

(56) Entgegenhaltungen:
**DE-A- 3 106 166**
**DE-B- 2 910 343**
**DE-B- 2 919 279**
**GB-A- 2 071 393**



(73) Patentinhaber: **Philips Patentverwaltung GmbH**
**Wendenstrasse 35 Postfach 10 51 49**
**W-2000 Hamburg 1(DE)**
(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**
(84) Benannte Vertragsstaaten:
**FR GB IT**

(72) Erfinder: **Klös-Hein, Karl**
**Erlenweg 18**
**W-6301 Wettenberg 2(DE)**
Erfinder: **Rumpf, Horst**
**Haupt-Strasse 22**
**W-6348 Herborn-Schönbach(DE)**

(74) Vertreter: **Kupfermann, Fritz-Joachim, Dipl.-Ing. et al**
**Philips Patentverwaltung GmbH Wendenstrasse 35 Postfach 10 51 49**
**W-2000 Hamburg 1(DE)**





Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Verstellen einer Kopfplatte in einem Magnetbandgerät, wobei die Kopfplatte mittels der Kraft einer ersten Feder eine vom Magnetband zurückgezogene erste Ruhestellung aufweist sowie eine erste Arbeitsstellung in einer Spielposition und eine zweite Arbeitsstellung in einer Schnellspulposition und wobei elektromagnetische Steuermittel vorgesehen sind, die die Arbeitsstellungen der Kopfplatte bestimmen in Verbindung mit einer federbelasteten Haltevorrichtung, die die Kopfplatte in der zweiten Arbeitsstellung festhält.

Bei Magnetbandgeräten, die zum Abspielen von Bandkassetten, insbesondere sogenannten Compact-Kassetten, eingerichtet sind, ist es bekannt, den Magnetkopf gegenüber dem in der Kassette angeordneten Magnetband zu verstellen. Hierzu ist der Magnetkopf einer aus Kopfplatte angeordnet, die elektromechanisch verschieblich ist. Es gibt eine Ruhestellung, in der die Kopfplatte mit dem Magnetkopf von Hand völlig weggezogen ist; es gibt eine erste Arbeitsstellung, in der die Kopfplatte mit dem Magnetkopf gegen das Band voll vorgefahren ist, die sogenannte Spiel-Stellung, und es gibt schließlich eine Zwischenstellung zwischen der ersten Arbeitsstellung und der Ruhestellung, in der das Magnetband nahezu berührungslos an dem Kopf vorbeigeführt werden kann. Dies ist die sogenannte Cue- oder MSS-Stellung.

Aus der DE-AS 29 10 343 ist es bekannt, die Kopfplatte mittels einer Feder in der Ruhestellung zu halten. Soll die Kopfplatte in die erste Arbeitsstellung vorgefahren werden, dann wird ein Elektromagnet erregt, der die Kopfplatte über einen Hebelmechanismus in die erste Arbeitsstellung zieht. Aus dieser ersten Arbeitsstellung kann die Kopfplatte über eine Sperrklinkenanordnung im Bereich der zweiten Arbeitsstellung beim Entregen des ersten Magneten in die Ruhestellung zurückfahren, wenn noch ein zweiter Elektromagnet die Sperrklinkenanordnung löst. Löst der zweite Elektromagnet die Sperrklinkenanordnung nicht, dann bleibt die Kopfplatte zunächst in der zweiten Arbeitsstellung stehen.

EP-A-0 290 078 und -0 295 726 beschreiben schon jeweils ein Vorrichtung gemäß dem Oberbegriff von Anspruch 1 mit elektromagnetischen Steuermittel in Form von Klebemagnetvorrichtungen 20 mit Ankereisen 22, 23, die mit einer ersten Ankerplatte 24 an der Kopfplatte 3 und einer zweiten Ankerplatte 25 an der Haltevorrichtung 30, 36 zusammenwirken (vgl. in EP-A-0 290 078 Sp.5 Z.26-40 und Sp.6 Z.33-35 sowie Fig.1-4, in EP-A-0 295 726 Sp.6 Z.33-47 und Sp.7 Z.35-37 sowie Fig.2-6). Diese Dokumente fallen indes unter Art. 54(3) EPÜ und sind daher für die Frage der erfinderischen Fätigkeit nicht von Bedeutung.

Es ist Aufgabe der Erfindung, eine Vorrichtung der eingangs erwähnten Art so auszubilden, daß die Kopfplatte mit möglichst wenigen Bauteilen aus einer Ruhelage in zwei Arbeitsstellungen überführbar ist und in diesen festgehalten werden kann.

Die gestellte Aufgabe ist erfindungsgemäß dadurch gelöst, daß die elektromagnetischen Steuermittel als Klebemagnetvorrichtung mit Ankereisen ausgebildet sind, die mit einer ersten Ankerplatte an der Kopfplatte und einer zweiten Ankerplatte an der Haltevorrichtung zusammenwirken, und daß die Rückstellkraft der Kopfplatte zwar größer ist als die von der federbelasteten Haltevorrichtung auf die zweite Ankerplatte gegen das ihr zugeordnete Ankereisen ausgeübte Haltekraft, aber so, daß die zweite Ankerplatte an dem ihr zugeordneten Ankereisen noch anliegt, wenn sich die erste Ankerplatte bereits von dem zugeordneten Ankereisen gelöst hat, und daß die zweite Ankerplatte der Haltevorrichtung die infolge eines Entregens der Klebemagnetvorrichtung abfallende Kopfplatte in der zweiten Arbeitsstellung auf dem Abfallweg anhält, indem die unmittelbar nach dem Entregen wieder erregte Klebemagnetvorrichtung nun mit ihrem Ankereisen die zweite Ankerplatte an sich anklebt.

Durch die Ausbildung als Klebemagnetvorrichtung können die Steuermittel mit geringer Leistung betrieben werden. Damit läßt sich die Wärmeentwicklung in den Magnetspulen klein halten. Beim Abfallen der Kopfplatte in die zweite Arbeitsstellung kann die zweite Ankerplatte wie zuvor die erste Ankerplatte an der selben Klebemagnetvorrichtung angeklebt werden. Dies führt zu einer bedeutenden mechanischen Vereinfachung.

Nach einer weiteren Ausgestaltung der Erfindung ist vorgesehen, daß die Klebemomentvorrichtung nur eine Erregerspule für beide Ankereisen aufweist. Der Einsatz nur einer Klebemagnetvorrichtung macht eine Verkleinerung der mechanischen Abmessungen möglich.

Nach einer weiteren Ausgestaltung der Erfindung ist vorgesehen, daß die Haltevorrichtung ein Abstandsglied aufweist, das die zweite Ankerplatte trägt, daß die zweite und die erste Ankerplatte in derselben Richtung gegenseitig parallel angeordnet sind und daß das Abstandsglied einen in Halterichtung federbelasteten Haltezapfen aufweist, wobei der Haltezapfen angeordnet ist im Weg einer Haltenase der Kopfplatte zwischen der ersten (Play)-Arbeitsstellung und der Ruhestellung im Bereich der zweiten (MSS)-Arbeitsstellung. Für das Festhalten der Kopfplatte in der ersten Arbeitsstellung wird die erste Ankerplatte am Klebemagneten angeklebt. Für das Halten in der zweiten Arbeitsstellung wird die zweite Ankerplatte am Klebemagneten angeklebt. Bei diesem Ankleben in der zweiten Arbeitsstellung sorgt die zweite angeklebte Ankerplatte für das Verriegelthalten der Haltevorrichtung. Die mechanische Haltefunktion ohne das Ankleben der zweiten Anklerplatte reicht nicht aus, um das Abstandsglied in der zweiten Arbeitsposition zu halten. Beim bleibenden Entregen der Erregerspule wird die Kopfplatte deshalb in die Ruhestellung zurückgeführt. Wird die Erregerspule aber zum Abfallen der Kopfplatte aus der ersten Arbeitsstellung entregt und kurz danach gleich wieder erregt, dann kann das Funktionsteil zwar aus der ersten Arbeitsstellung zurückfahren; es wird aber in der zweiten Arbeitsstellung angehalten, da die nun wieder angeklebte zweite Ankerplatte die Haltevorrichtung elektrisch festhält; aus dieser zweiten Arbeitsstellung löst sich die Kopfplatte in Richtung auf die Ruhestellung erst, wenn der Klebemagnet noch einmal entregt wird.

Nach einer weiteren Ausgestaltung der Erfindung ist vorgesehen, daß das Abstandsglied parallel zur Ebene der Kopfplatte schwenkbar ist um eine seitlich der Haltemagnetvorrichtung vorgesehene Achse und aus zwei Riegelarmen besteht, von denen ein längerer die zweite Ankerplatte und ein kürzerer den Haltezapfen aufweist, und daß ein Federglied vorgesehen ist, das das Abstandsglied in Richtung auf die Klebemagnetvorrichtung belastet. Da der längere Haltearm die Ankerplatte trägt, genügt eine außerordentlich geringe Anklebekraft des Elektromagneten, um in der zweiten Arbeitsstellung den Haltezapfen hinter der Haltenase zu halten.

Nach einer weiteren Ausgestaltung der Erfindung ist vorgesehen, daß das Federglied ein federnder Kunststoffarm ist, der sich am Chassis des Gerätes abdrückt. Der federnde Kunststoffarm kann gleich zusammen mit dem Abstandsglied aus Kunststoff gespritzt werden und verursacht damit keine besonderen Herstellungs- oder Montagekosten.

Nach einer weiteren Ausgestaltung der Erfindung ist vorgesehen, daß das Längenverhältnis des kürzeren zum längeren Haltearm ca. 1:2,5 beträgt. Ein solches Längenverhältnis reicht aus, um die Haltevorrichtung mit geringer Anklebekraft in der Haltestellung zu halten.

Nach einer weiteren Ausgestaltung der Erfindung ist vorgesehen, daß die Ankereisen der Klebemagnetvorrichtung U-förmig ausgebildet und übereinander angeordnet sind, wobei die Ankerpole alle an einer der Stirnseiten und die gleichnamigen Ankerpole paarweise auf Abstand übereinander angeordnet sind. Eine derartige Anordnung läßt sich mit geringen Mehrkosten bei der Magnetherstellung schaffen; die Kosten sind jedoch erheblich geringer gegenüber dem Einsatz von zwei räumlich getrennten Elektromagneten.

Nach einer weiteren Ausgestaltung der Erfindung ist vorgesehen, daß die Ankerpole, die mit der zweiten Ankerplatte des Abstandsgliedes zusammenwirken, einen größeren Pol-Querschnitt aufweisen als die Ankerpole der ersten Ankerplatte der Kopfplatte. Auf diese Weise läßt sich die Anklebekraft der Ankerplatten an den Ankerpolen beeinflussen. Als Richtwerte für die Anklebekraft der Ankerplatte des Funktionsteiles an der Klebemagneetvorrichtung können beispielsweise 8 N angesehen werden, während die Anklebekraft der Ankerplatte des Abstandsgliedes 14 N betragen kann, wenn bei gleicher Polbreite die Ankerpole für die erste Ankerplatte 2 mm hoch und die Magnetpole für die zweite Ankerplatte 3 mm hoch ausgebildet sind.

Die Klebemagnetvorrichtung hat eine bestimmte Zeitkonstante, innerhalb der sie entregt und wieder erregt werden kann. Diese Zeitkonstante läßt sich nach einer weiteren Ausgestaltung der Erfindung dadurch verkürzen, daß die Zeitkonstante der Klebemagnetvorrichtung durch das Anlegen einer höheren Spannung beim Wiedererregen für die zweite Ankerplatte verkürzt wird. Auf diese Weise läßt sich beispielsweise die Zeit zwischen Entregung durch Stromabschaltung und erneuter Erregung durch Stromeinschaltung auf ca. 3 msec verkürzen.

Nach einer weiteren Ausgestaltung der Erfindung ist vorgesehen, daß die Ankerplatten sowie die Haltevorrichtung an einem Schenkel der U-förmig ausgebildeten Kopfplatte angeordnet sind, wobei wenigstens ein Magnetkopf und die Tonrollen an der Basis dieser U-förmigen Kopfplatte angeordnet sind, wobei der andere Schenkel von einem Stellmechanismus beaufschlagbar ist und wobei die U-förmige Kopfplatte um einen Drehpunkt verschwenkbar ist gegen die Wirkung einer Rückholfeder, um den Tonkopf und die Tonrollen auf ein Magnetband zu zu verstellen, wobei das Magnetband in der ersten Arbeitsstellung am Tonkopf anliegt (Play-Stellung) und in der zweiten Arbeitsstellung vom Tonkopf leicht abgehoben ist (MSS-Stellung).

Die Erfindung wird anhand der Zeichnung näher erläutert. Es zeigen:

Fig. 1 einen Teil eines Magnetbandgerätes mit einer Gestellplatte und einer darauf schwenkbar gelagerten Kopfplatte, die um einen exzentrischen Drehpunkt drehbar ist , wobei die Kopfplatte unter Wirkung von Federkraft in ihrer Ruhestellung geschwenkt ist und zwei andere Arbeitsstellungen von einer Elektromagnetvorrichtung bestimmt werden,

Fig. 2 eine schaubildliche Darstellung eines Elektromagneten der Elektromagnetvorrichtung,

Fig. 3 eine schaubildliche und geteilte Darstellung der Elektromagnetvorrichtung, mittels der die Kopfplatte insbesondere in zwei vorgegebenen Arbeitsstellungen festhaltbar ist,

Fig. 4 die Kopfplatte in einer Lage, in der die Elektromagnetvorrichtung die Kopfplatte verschwenkt hält, und zwar in einer Stellung mit so großer Verschwenkung, daß der Magnetkopf in die Spielstellung gelangt ist,

Fig. 5 die Kopfplatte in einer Stellung, in der der Tonkopf ein wenig von dem Magnetband abgehoben ist, eine erste Ankerplatte jedoch an der Elektromagnetvorrichtung anliegt,

Fig. 6 zeitlich übereinander angeordneten Funktionsdiagramme der beim Anhalten in der zweiten Arbeitsstellung zusammenwirkenden Funktionen.

Die Zeichnung zeigt auf eine als Gestell wirkende Chassisplatte 1 eines Magnetband-Kassettengerätes mit einem Geräteteil 3, das um einen exzentrischen Drehpunkt 5 verschwenkbar ist. Das Geräteteil 3 ist U-förmig ausgestaltet und weist von den Enden seiner eine Kopfplatte bildenden Basis 7 in gleicher Richtung abstehende Schenkel 9 und 11 auf. Die Schenkel 9 und 11 greifen in Eckbereichen 12 und 13 an. Während der Schenkel 9 mit einem Verstellorgan 14 zusammenwirkt, bildet der Schenkel 11 ein Funktionsteil, welches mit einer Elektrohaltemagnetvorrichtung 15 zusammenarbeitet.

Die Kopfplatte 7 des Geräteteiles 3 trägt einen Magnetkopf 16 und Andruckrollen 17a, 17b, die gegenüber der Kopfplatte 7 verschwenkbar sind, deren Verschwenkungsart jedoch nicht näher erläutert ist. Die Andruckrollen 17a und 17b können mit Tonwellen 18a und 18b zusammengeführt werden, um das nicht dargestellte Magnetband in der einen oder anderen Richtung an dem Magnetkopf 16 vorbei zu führen.

Die Verschwenkung des Geräteteils 3 erfolgt jeweils über ein als Exzenterrad dargestellte Verstellorgan 14. Dieses Verstellorgan 14, das selbstverständlich auch als Stange ausgebildet sein kann, wirkt auf eine Feder 19 ein, die am Schenkel 9 eingespannt ist. Über das Stellorgan 14 kann das Geräteteil 3 um den exzentrischen Drehpunkt 5 schwenken, und zwar bei jedem Anstoßen mittels des Verstellorganes 14, das beispielsweise im Uhrzeigersinn umlaufen kann. Eine Rückholfeder 37 ist bestrebt, das Geräteteil 3 mit dem Magnetkopf 16 und den Andruckrollen 17a, 17b in die Ruhestellung zurückzuschwenken.

Die Haltemagnetvorrichtung 15 weist einen Elektromagneten 120 mit einer Magnetspule 121 auf. Die Magnetspule 121 ist auf einen Spulenhohlkörper 122 gewickelt, der Spulenflansche 132 aufweist. In den Spulenkörper 122 sind zwei U-förmige Ankereisen 124 und 125 eingeschoben, wobei jeweils nur zwei Schenkel 124a und 125a den Spulenkörper 122 durchsetzen und die jeweils anderen Schenkel 124b und 125b außerhalb der Magnetspule 120 liegen. Die Ankereisen 124 und 125 haben ihre Ankerpole 124c, 124d und 125c, 125d alle an einem axialen Ende 126 der Magnetspule 121. Alle Ankerpole liegen in einer Ebene. Die Anordnung ist dabei paarweise, so daß die Ankerpole 124c und 125c vor dem Spulenende 126 auf Abstand übereinander und die Pole 124d und 125d ebenfalls paarweise übereinanderliegen. Alle Magnetpole haben eine einheitliche Breite b; ihre Höhe ist unterschiedlich. Die Höhe der Ankerpole 124c und 124d ist kleiner als die der Ankerpole 125c und 125d. Bei einem ausgeführten Beispiel haben die Ankerpole 124c und 124d eine Höhe d1 von ca. 7 mm und die Ankerpole 125c und 125d eine Höhe d2 von ca. 10,5 mm.

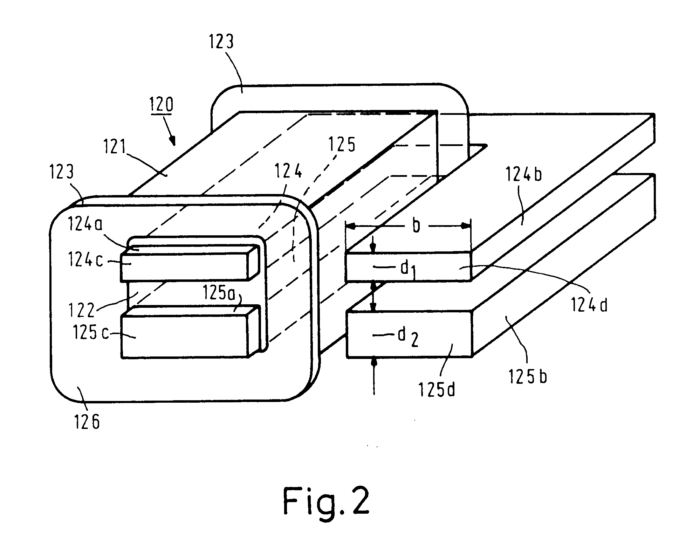

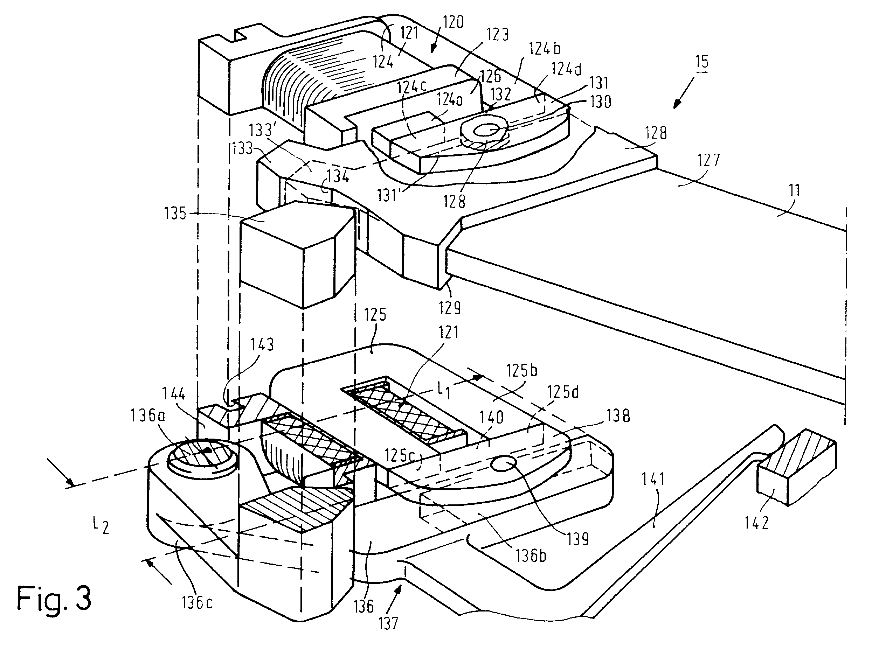

Fig. 3 zeigt die Haltemagnetvorrichtung 15 in einer schaubildlichen Darstellung und in zwei Teile getrennt, um den Aufbau und die Wirkungsweise deutlicher darstellen zu können. Man erkennt das vordere Ende 127 des Funktionsteiles 11, auf das ein Kunststoffkopf 128 aufgespritzt ist. Dieser aufgespritzte Kunststoffkopf trägt an seiner Unterseite 129 über ein Drehlager 130 eine Ankerplatte 131 aus Weicheisen. Diese Ankerplatte 131, später als erste Ankerplatte bezeichnet, kann sich mit ihrer Stirnfläche 132 an die Ankerpole 124c und 124d anlegen. Die Ankerplatte 131 ist in eine zur Ebene des Funktionsteile 11 parallelen Ebene verdrehbar. An den Kunststoffkopf 128 ist eine Nase 133 angespritzt, hinter der sich zum Funktionsteil 11 hin eine Mulde 134 befindet. In die Mulde 134 kann ein Haltezapfen 135 einfallen. Dieser Haltezapfen 135 ist an ein Abstandsglied 136 angespritzt, das der zentrale Teil einer Haltevorrichtung 137 ist. Das Abstandsglied 136 ist um eine Achse 136a verschwenkbar. Das Abstandsglied 136 trägt eine zweite Ankerplatte 138, die um eine Achse 139 in einer parallelen Ebene zum Funktionsteil drehen kann. Die Länge L1 des Abstandsgliedes zwischen Achse 136a und seinem freien Ende (Haltearm 136b) entspricht dem 2,5-fachen der Länge L2 des Abstandsgliedes zwischen Achse 136a und Riegelzapfen 135 (Haltearm 136c). Die Stirnseite 140 der zweiten Ankerplatte 138 kann sich an die Ankerpole 125c und 125d des Ankereisens 125 anlegen. Die Ankereisen 125 und 124 liegen, wie in der Darstellung nach Fig. 2, parallel übereinander. Das Abstandsglied 136 ist mit einem federnden Kunststoffarm 141 versehen, der sich an einem ortsfesten Chassisteil 142 abstützt. Der federnde Kunststoffarm 141 drückt die zweite Ankerplatte 138 über das Abstandsglied 136 immer ein wenig gegen die Ankerpole 125c und 125d.

An der Rückseite der Haltemagnetvorrichtung ist beispielsweise eine Nut 143 vorgesehen, mit der die Haltemagnetvorrichtung 15 auf einem Chassisteil festlegbar ist. Eine Stütze 144, in der die Nut 143 vorgesehen ist, trägt auch die Achse 136a für das Abstandsglied 136. Die in Fig. 3 dargestellte Betriebsstellung ist die sogenannte Spielstellung, in der das Funktionsteil 11 am weitesten vorgefahren ist und die erste Ankerplatte 131 und zweite Ankerplatte 138 an den Ankerpolen 124c und 124d bzw. 125c und 125d anliegen.

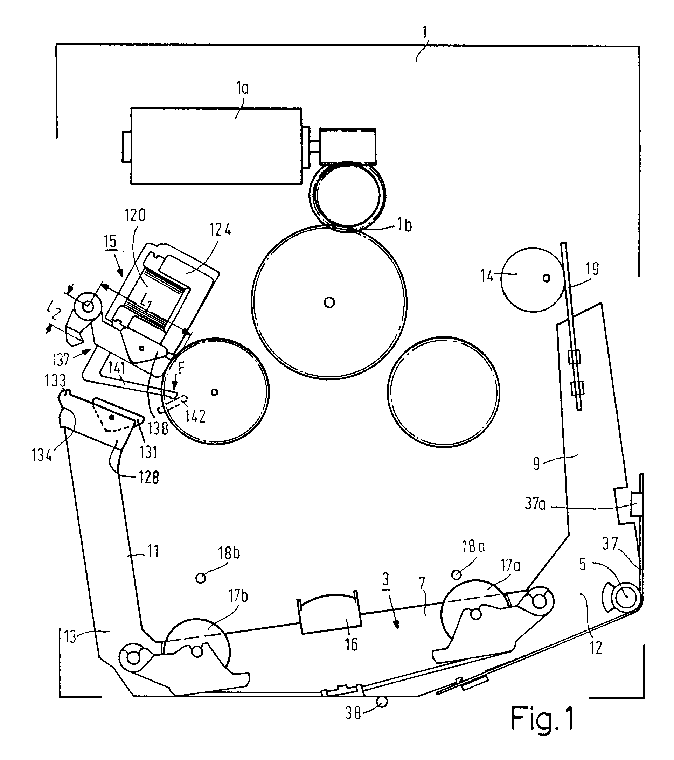

Es wird nun wieder zurückgegangen nach Fig. 1, und zwar der Stellung, in der die Kopfplatte sich in ihrer Ruhelage befindet. Man sieht, daß das Funktionsteil 11 von der Haltemagnetvorrichtung 15 abgefallen ist, und die erste Ankerplatte 131 liegt damit weit ab von dem Ankereisen 124. Die Haltenase 133 und die Mulde 134 liegen frei. Der Kunststoffarm 141 drückt die zweite Ankerplatte 138 gegen die Ankerpole 125c und 125d. Der Kunststoffarm 141 drückt mit einer Kraft F gegen das ortsfeste Chassisteil 142 an der Chassisplatte 1. In dieser Ruhe- oder Stand-by-Stellung ist der Elektromagnet 120 abgeschaltet.

Die Feder 37, die sich mittels einer Klammer 37a an der Chassisplatte 1 abstützt, hält die Kopfplatte 7 im Gegen-Uhrzeigersinn verschwenkt, wobei sie an einem Anschlag 38 anliegt. Sowohl der Magnetkopf 16 als auch die Andruckrollen 17a und 17b geben ein nicht dargestelltes Magnetband, welches zwischen den Andruckrollen/Tonwellenpaaren 17a, 18a/17b, 18b vor dem Magnetkopf 16 vorbei läuft, völlig frei.

Wird das Gerät in Betrieb genommen und soll die Kopfplatte 7 in ihre Spielstellung, die erste Arbeitsstellung, verschwenkt werden, dann wird zunächst ein Stellmotor 1a in Betrieb genommen, der über ein Getriebe 1b auf nicht näher dargestellte Weise das Verstellorgan 14 verdreht. Dieses Verstellorgan kann in gleicher Weise auch ein Schieber sein. Beim Verdrehen des Verstellorganes 14 in Richtung des dargestellten Pfeiles wird die Kopfplatte 7 im Uhrzeigersinn verschwenkt. Wird nun der Elektromagnet 120 erregt, dann sind alle Ankerpole 124 und 125 magnetisiert. Führt das Funktionsteil 11 die erste Ankerplatte 131 an die ihr zugeordneten Magnetpole 124c und 124d heran, dann bleibt diese an diesen Ankerpolen kleben, und die Kopfplatte 7 ist in der Spielstellung festgelegt. Das Verstellorgan 14 dreht sich weiter und entlastet die Feder 19. Nur der als Klebemagnet ausgebildete Elektromagnet 120 hält die Kopfplatte 7 in der ersten Arbeitsstellung, der Spielstellung.

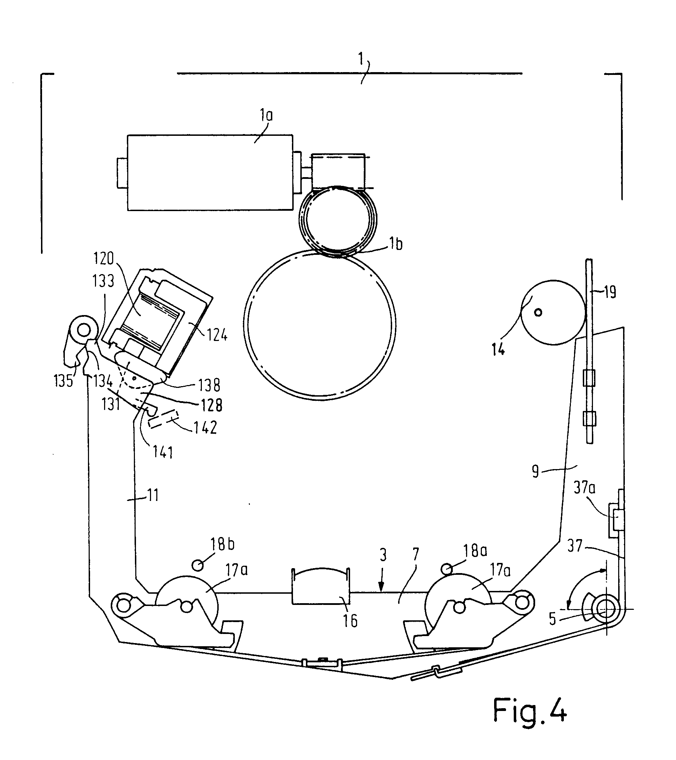

Fig. 3 und Fig. 4 zeigen diese Spielstellung. Ebenso wie die erste Ankerplatte 131 wird auch die zweite Ankerplatte 138 in der Spielstellung von den Ankerpolen angezogen.

Soll die Kopfplatte 7 aus der Spielstellung nach Fig. 3 und 4 unmittelbar in die Ruhestellung zurückkehren, dann wird lediglich der Elektromagnet 120 entregt. Die Ankerpole 124 und 125 geben die Ankerplatten frei, und das Funktionsteil 11 fährt in Richtung auf die Ruhestellung zurück, wobei zunächst die Haltenase 133 auf den in die Mulde 134 eingefallenen Haltezapfen 135 aufläuft. Die Rückfederbewegung des Funktionsteiles erfährt dadurch eine zeitliche Verzögerung. Die Haltenase 133 verdreht beim Auflaufen auf den Haltezapfen das Abstandsglied 136 im Uhrzeigersinn entgegen der Rückhaltekraft der Kunststoffarm 141, läuft am weggschwenkenden Haltezapfen 135 vorbei, und das Funktionsteil 11 kehrt in seine Ruhestellung nach Fig. 1 zurück.

Soll jedoch von der Spielstellung, der ersten Arbeitsstellung, in eine Zwischenstellung, beispielsweise die Cue- oder MSS(Music-Sensing-System)-Stellung, für schnellen Vor- und Rücklauf übergegangen werden, dann wird der Elektromagnet 120 zwar auch entregt. Die Haltenase 133 fällt vor den Haltezapfen 135, der in die Mulde 134 eingreift. Die Bewegung des Funktionsteiles 11 entgegen dem Uhrzeigersinn wird beim Schwenken in Richtung auf die Ruhestellung aufgehalten an der Stelle, an der die Haltenase 133 gegen den Haltezapfen 135 aufläuft. Zu diesem Zeitpunkt hat sich die erste Ankerplatte 131 bereits von den Ankerpolen 124 gelöst hat. Aufgrund der Rückstellkraft des Kunststoffarmes 141 hat sich die zweite Ankerplatte 138 aber noch nicht von ihren Ankerpolen 125c und 125d gelöst; sie nimmt die in Fig. 3 angegebene Stellung noch weiterhin ein, in der sie an den Ankerpolen 125c und 125d anliegt. Die Rückstellfederkraft des Funktionsteiles 11 ist größer als die Haltekraft der Kunststoffarm 141. Die Haltevorrichtung 133 bis 135 kann das Funktionsteil 11 in der zweiten Arbeitsstellung nicht halten. Das Halten in der zweiten Arbeitsstellung bewirkt der kurz nach dem Entregen wieder erregte Elektromagnet 120. Durch das erneute Erregen erhöht sich die Haltekraft des Abstandsgliedes 136 und damit des Haltezapfens 135 so weit erhöht, daß die Haltenase 133 nicht an dem Haltezapfen 135 vorbei kann.

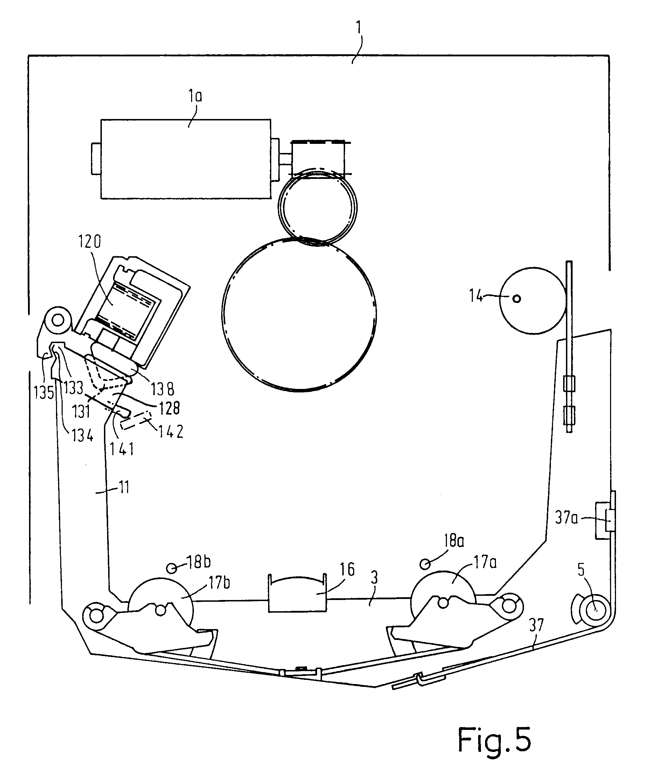

In Fig. 5 ist die zweite Arbeitsstellung dargestellt, wobei die erste Ankerplatte 131 ein wenig zurückgefallen ist, die zweite Ankerplatte 138 jedoch weiter an den Ankerpolen 125c und 125d anliegt. Aufgrund der Klebekraft de Ankerplatte 138 an den zugeordneten Ankerpolen hält der Haltezapfen 135 die Haltenase 133 fest.

Soll von der zweiten Arbeitsstellung wieder in die erste Arbeitsstellung übergegangen werden, dann ist die möglich, indem das Verstellorgan 14 die Kopfplatte 7 wieder im Uhrzeigersinn schwenkt, so daß auch die Ankerplatte 131 wieder magnetisch an die Ankerpole 125c und 125d angeklebt werden kann. Eine Rückkehr der Kopfplatte 7 aus der zweiten Arbeitsstellung nach Fig. 5 in die Ruhestellung nach Fig. 1 wird erreicht durch Entregen der Magnetspule 120.

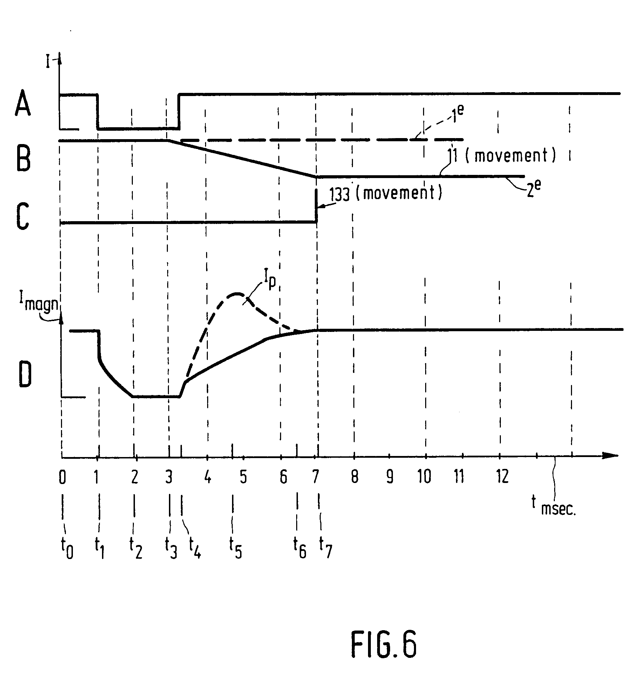

Die Funktionsabläufe beim Übergang von der ersten Arbeitsstellung in die zweite Arbeitsstellung laufen zeitlich in sehr kurzer Folge im Bereich von ca. 4 msec ab. Diese miteinander zusammenspielenden Funktionen oder Funktionsabläufe werden deshalb anhand des Funktionsdiagrammes nach Fig. 6 näher beschrieben. Fig. 6 zeigt über einer horizontalen Zeitskala, die in Millisekunden aufgetragen ist, mehrere zusammenhängende Funktionen. Das obere Diagramm A zeigt den Erregerstrom. Das darunterliegende Diagramm B zeigt die Bewegung des Funktionsteiles 11. Darunter findet sich das Diagramm C, welches die Bewegung der Haltenase zeigt. Schließlich zeigt das Diagramm D den Magnetisierungsstrom des Elektromagneten bzw. den Verlauf des Erregungszustandes des Poleisens.

Es sei angenommen, daß im Zeitpunkt $t_0$ das Funktionsteil 11 und die Ankerplatte 131 an die Ankerpole 124c und 124d herangefahren und die Spule 121 erregt ist. Das Funktionsteil 11 befindet sich damit in seiner ersten Arbeitsstellung oder der Spielstellung ($1^e$). Zum Zeitpunkt $t_1$ kommt durch Drücken eines Tastknopfes das Kommando, daß das Funktionsteil 11 in die zweite Arbeitsstellung ($2^e$),die MSS-Stellung, überführt werden soll. Dieses Kommando hat zur Folge, daß der Erregerstrom I abgeschaltet wird. Das Diagramm A zeigt das Abschalten des Erregerstromes zum Zeitpunkt $t_1$. Mit dem Abschalten fällt auch die Magnetisierung des Ankereisens ab. Zum Zeitpunkt $t_2$ ist, wie das Diagramm D zeigt, nur noch eine Restmagnetisierung vorhanden. Das Nachlassen der Magnetisierung der Ankerpole führt dazu, daß das Funktionsteil 11 mit einer gewissen Zeitverzögerung anfängt abzufallen. Unmittelbar nach dem Beginn dieses Abfallens im Zeitpunkt $t_3$ wird der Erregerstrom der Spule 121 wieder eingeschaltet, und zwar zum Zeitpunkt $t_4$. Man erkennt, daß die Magnetisierung der Ankerpole im Diagramm D wieder zunimmt. Zum Zeitpunkt $t_6$ hat die Magnetisierung der Ankerpole etwa wieder ihren Normalwert erreicht, und zum Zeitpunkt $t_7$ fällt die Haltenase 133 gerade vor den Haltezapfen 135. Dieser Augenblick ist in Fig. 2 mit der gestrichelten Haltenase 133' angedeutet. Die Ankerplatte 138, die gerade noch mittels der Kunststoffarm 141 an den Ankerpolen 125c und 125d gehalten wird, wird nunmehr von den Ankerpolen 125c und 125d festgehalten. Damit wird das Funktionsteil 11 in der Stellung für MSS oder Cue gehalten.

Es kann von Vorteil sein, wenn die Erregerspannung an der Erregerspule 121 zum Zeitpunkt $t_4$ höher gefahren wird als normal. In diesem Fall erreicht die Magnetisierung der Ankerpole im Zeitpunkt $t_5$ bereits einen solchen Wert, daß die Klebekraft der Ankerpole 125c und 125d die Kraft der Kunststoffeder 141 so weit unterstützt, daß die dadurch erreichte magnetische Haltekraft, unterstützt durch die mechanische Haltekraft, größer als die Rückstellfederkraft des Funktionsteiles 11. Der Zeitraum, in dem die Erregerspule 121 nicht erregt ist ($t_1$ bis $t_4$) beträgt etwa 2,3 msec. Beim Anlegen des Überspannungsimpulses Ip, der zur Magnetisierung zum Zeitpunkt $t_5$ führt, kann der Zeitraum $t_1$ bis $t_4$ auch bis auf ca. 3 msec verlängert werden. Dies bedeutet eine zusätzliche Sicherheit. Zum Übergang des Funktionsteils 11 von der ersten Arbeitsstellung ($1^e$) in die zweite Arbeitsstellung ($2^e$) benötigt die Vorrichtung nur ca. 4 msec.

Die Kombination aus mechanischer und elektrischer Funktionsweise, die beim Einlaufen in die MSS-Stellung vorgesehen ist, führt zu einer außerordentlich einfachen Konstruktion. Insgesamt führt die Ausführung mit dem Doppelankermagneten zu einer wesentlichen Vereinfachung eines Laufwerkes.

## Patentansprüche

**1.** Vorrichtung zum Verstellen einer Kopfplatte (3) in einem Magnetbandgerät, wobei die Kopfplatte (3) mittels der Kraft einer ersten Feder (37) eine vom Magnetband zurückgezogene erste Ruhestellung aufweist sowie eine erste Arbeitsstellung in einer Spielposition und eine zweite Arbeitsstellung in einer Schnellspulposition und wobei elektromagnetische Steuermittel (120) vorgesehen sind, die die Arbeitsstellungen der Kopfplatte (3) bestimmen in Verbindung mit einer federbelasteten Haltevorrichtung (137), die die Kopfplatte (3) in der zweiten Arbeitsstellung festhält, dadurch gekennzeichnet, daß die elektromagnetischen Steuermittel als Klebemagnetvorrichtung (120) mit Ankereisen (124, 125) ausgebildet sind, die mit einer ersten Ankerplatte (131) an der Kopfplatte (3) und einer zweiten Ankerplatte (138) an der Haltevorrichtung (137) zusammenwirken, und daß die Rückstellkraft der Kopfplatte (3) zwar größer ist als die von der federbelasteten Haltevorrichtung (137) auf die zweite Ankerplatte (138) gegen das ihr zugeordnete Ankereisen (125) ausgeübte Haltekraft, aber so, daß die zweite Ankerplatte (138) an dem ihr zugeordneten Ankereisen (125) noch anliegt, wenn sich die erste Ankerplatte (131) bereits von dem zugeordneten Ankereisen (124) gelöst hat, und daß die zweite Ankerplatte (138) der Haltevorrichtung (137) die infolge eines Entregens der Klebemagnetvorrichtung (15) abfallende Kopfplatte (3) in der zweiten Arbeitsstellung auf dem Abfallweg anhält, indem die unmittelbar nach dem Entregen wieder erregte Klebemagnetvorrichtung (15) nun mit ihrem Ankereisen (125) die zweite Ankerplatte (138) an sich anklebt.

**2.** Vorrichtung nach Anspruch 1, dadurch gekennzeichnet, daß die Klebemagnetvorrichtung (120) nur eine Erregerspule (121) für beide Ankereisen (124, 125) aufweist.

**3.** Vorrichtung nach Anspruch 1, dadurch gekennzeichnet, daß die Haltevorrichtung (137) ein Abstandsglied (136) aufweist, das die zweite Ankerplatte (138) trägt, daß die zweite (138) und die erste (131) Ankerplatte in derselben Richtung gegenseitig parallel angeordnet sind und daß das Abstandsglied (136) einen in Halterichtung federbelasteten Haltezapfen (135) aufweist, wobei der Haltezapfen (135) angeordnet ist im Weg einer Haltenase (133) der Kopfplatte (3) zwischen der ersten (Play)-Arbeitsstellung und der Ruhestellung im Bereich der zweiten (MSS)-Arbeitsstellung.

**4.** Vorrichtung nach Anspruch 3, dadurch gekennzeichnet, daß das Abstandsglied (136) parallel zur Ebene der Kopfplatte (3) schwenkbar ist um eine seitlich der Haltemagnetvorrichtung vorgesehene Achse und aus zwei Riegelarmen (136b, 136c) besteht, von denen ein längerer (136b) die zweite Ankerplatte (138) und ein kürzerer (136c) den Haltezapfen (135) aufweist, und daß ein Federglied (141) vorgesehen ist, das das Abstandsglied (136) in Richtung auf die Klebemagnetvorrichtung (15) belastet.

**5.** Vorrichtung nach Anspruch 4, dadurch gekennzeichnet, daß das Federglied (141) ein federnder Kunststoffarm ist, der sich am Chassis (1) des Gerätes abstützt.

**6.** Vorrichtung nach Anspruch 4, dadurch gekennzeichnet, daß das Längenverhältnis (L1/L2) des kürzeren zum längeren Haltearm (136b, 136c) ca. 1:2,5 beträgt.

**7.** Vorrichtung nach Anspruch 2, dadurch gekennzeichnet, daß die Ankereisen (124, 125) des Klebemagneten (120) U-förmig ausgebildet und übereinander angeordnet sind. wobei die Ankerpole (124c, d; 125c, d) alle an einer der Stirnseiten (126) und die gleichnamigen Ankerpole (124c, 125c; 124c, 125c) paarweise auf Abstand übereinander angeordnet sind.

**8.** Vorrichtung nach Anspruch 7, dadurch gekenzeichnet, daß die Ankerpole (125c, 125d), die mit der zweiten Ankerplatte (138) des Abstandsglieds (136) zusammenwirken, einen größeren Pol-Querschnitt aufweisen als die Ankerpole (124c, 124d) der ersten Ankerplatte (131) der Kopfplatte (3).

**9.** Vorrichtung nach Anspruch 1, dadurch gekennzeichnet, daß die Zeitkonstante der Klebemagnetvorrichtung (120) durch das Anlegen einer höheren Spannung beim Wiedererregen für die zweite Ankerplatte (130) verkürzt wird.

**10.** Vorrichtung nach einem der Ansprüche 1 oder 3, dadurch gekennzeichnet, daß die Ankerplatten (131 und 138) sowie die Haltevorrichtung (137) an einem Schenkel (11) der U-förmig ausgebildeten Kopfplatte (3) angeordnet sind, wobei wenigstens ein Magnetkopf (16) und die Tonrollen (17a, 17b) an der Basis dieser U-förmigen Kopfplatte (3) angeordnet sind, wobei der andere Schenkel (9) von einem Stellmechanismus (14) beaufschlagbar ist und wobei die U-förmige Kopfplatte (3) um einen Drehpunkt (5) verschwenkbar ist gegen die Wirkung einer Rückholfeder (37), um den Tonkopf (16) und die Tonrollen (17a, 17b) auf ein Magnetband zu zu verstellen, wobei das Magnetband in der ersten Arbeitsstellung am Tonkopf (16) anliegt (Play-Stellung) und in der zweiten Arbeitsstellung vom Tonkopf leicht abgehoben ist (MSS-Stellung).

## Claims

**1.** A device for moving a head-mounting plate (3) in a magnetic-tape apparatus, the head-mounting plate (3) having a rest position, in which it is withdrawn from the magnetic tape by the force of a first spring (37), a first operating position in a play mode and a second operating position in a fast-winding mode, electromagnetic actuating means (120) being provided, which define the operating positions of the head-mounting plate (3) in conjunction with a spring-loaded latching device (137), which holds the head-mounting plate (3) in the second operating position, characterised in that the electromagnetic actuating means are constructed as a holding-magnet device (120) having armatures (124, 125) which cooperate with a first armature plate (131) on the head-mounting plate (3) and a second armature plate (138) on the latching device (137), the return force of the head-mounting plate (3) is larger than the force exerted by the spring-loaded latching device (137) on the second armature plate (138) to hold it against its associated armature (125) but is such that the second armature plate (138) is still positioned on its associated armature (125) when the first armature plate (131) is already disengaged from the associated armature (1240, and the second armature plate (138) of the latching device (137) holds the head-mounting plate (3), which is released as a result of a de-energisation of the holding-magnet device (15), in the second operating position during its release movement in that the holding-magnet device (15), which is energised immediately after the de-energisation, now holds the second armature plate (138) by means of its armature (125).

2. A device as claimed in Claim 1, characterised in that the holding-magnet device (120) comprises only one magnet coil (121) for both armatures (124, 125).

3. A device as claimed in Claim 1, characterised in that the latching device (137) comprises a spacing member (136) carrying the second armature plate (138), the second armature plate (138) and the first armature plate (131) are arranged parallel to one another in the same direction, and the spacing member (136) comprises a latching pin (135) which is spring-loaded in the holding direction, the latching pin (135) being arranged in the path of a latching nose (133) of the head-mounting plate (3) between the first (play) operating position and the rest position in the area of the second (MSS) operating position.

4. A device as claimed in Claim 3, characterised in that the spacing member (136) is pivotable parallel to the plane of the head-mounting plate (3) about a pivot adjacent the holding-magnet device and comprises two latching arms (136b, 136c), of which a longer arm (136b) carries the second armature plate (138) and a shorter arm (136c) carries the latching pin (135), and there is provided a spring member (141) which urges the spacing member (136) towards the holding-magnet device (15).

5. A device as claimed in Claim 4, characterised in that the spring member (141) is a resilient plastics arm which bears on the chassis (1) of the apparatus.

6. A device as claimed in Claim 4, characterised in that the length ratio (L1/L2) between the shorter and the longer latching arm (136b, 136c) is approximately 1:2.5.

7. A device as claimed in Claim 2, characterised in that the armatures (124, 125) of the holding magnet (120) are U-shaped and are arranged one above the other, the armature poles (124c, d; 125c, d) all being situated on one of the end faces (126) and like armature poles (124c, 125c; 124d, 125d) being arranged in spaced-apart pairs above one another.

8. A device as claimed in Claim 7, characterised in that the armature poles (125c, 125d) adapted to cooperate with the second armature plate (138) of the spacing member (136) have a larger cross-sectional pole area than the armature poles (124c, 124d) adapted to cooperate with the first armature plate (131) of the head-mounting plate (3).

9. A device as claimed in Claim 1, characterised in that the time constant of the holding-magnet device (120) is reduced by applying a higher voltage for reenergisation of the second armature plate (138).

10. A device as claimed in Claim 1 or 3, characterised in that the armature plates (131 and 138) and the latching device (137) are arranged on a limb (11) of the U-shaped apparatus head-mounting plate (3), the base of said U-shaped head-mounting plate (3) carrying at least one magnetic head (16) and pressure rollers (17a, 17b), the other limb (9) being adapted to be acted upon by an actuating mechanism (14), and the U-shaped head-mounting plate (3) being pivotable about a pivot (5) against the action of a return spring (37) in order to move the magnetic head (16) and the pressure rollers (17a, 17b) towards a magnetic tape, the magnetic tape being situated against the magnetic head (16) in the first operating position (play position) and being slightly lifted off the magnetic head in the second operating position (MSS position).

## Revendications

1. Dispositif pour déplacer une plaque porte-tête (3) dans un appareil à bande magnétique, la plaque porte-tête (3) présentant, à l'intervention de la force d'un premier ressort (37), une première position de repos rétractée par rapport à la bande magnétique, ainsi qu'une première position de travail correspondant à une position de lecture et une seconde position de travail correspondant à une position de bobinage rapide, des moyens de commande électromagnétiques (120) étant prévus pour déterminer les positions de travail de la plaque porte-tête (3) en association avec un dispositif de retenue à ressort (137) qui immobilise la plaque porte-tête (3) dans la seconde position de travail, caractérisé que ce que les moyens de commande électromagnétiques ont la forme d'un dispositif à aimant de collage (120) comportant des noyaux de fer (124, 125) qui coopèrent avec une première plaque d'armature (131) au niveau de la plaque porte-tête (3) et avec une seconde plaque d'armature (138), au niveau du dispositif de retenue (137), et que la force de rappel de la plaque porte-tête (3) est certes plus grande que la force de retenue exercée par le dispositif de retenue à ressort (137) sur la seconde plaque d'armature (138), à l'encontre de la force de retenue exercée par le noyau de fer (125) qui y est associé, mais d'une manière telle que la seconde plaque d'armature (138) soit encore en contact avec le noyau de fer (125) qui y est associé lorsque la première plaque d'armature (131) s'est déjà écartée du noyau de fer (124) qui y est associé, et que la seconde plaque d'armature (138) du dispositif de retenue (137) arrête la plaque porte-tête (3), qui recule suite à une désexcitation du dispositif à aimant de collage (15), dans la seconde position de travail située sur le trajet de recul, par le fait que le dispositif à aimant de collage (15) réexcité immédiatement après la désexcitation attire à présent par son noyau de fer (125) la seconde plaque d'armature (138).

**2.** Dispositif suivant la revendication 1, caractérisé en ce que le dispositif à aimant de collage (120) ne comporte qu'une seule bobine d'excitation (121) pour les deux noyaux de fer (124, 125).

**3.** Dispositif suivant la revendication 1, caractérisé en ce que le dispositif de retenue (137) comporte un élément d'espacement (136) qui porte la seconde plaque d'armature (138), que la seconde plaque d'armature (138) et la première plaque d'armature (131) sont montées parallèlement l'une à l'autre et orientées dans la même direction et que l'élément d'espacement (136) comporte un talon de retenue (135) rappelé élastiquement dans le sens de retenue, le talon de retenue (135) étant installé dans le chemin d'un bec de retenue (133) de la plaque porte-tête (3) entre la première position de travail (play) et la position de repos dans le domaine de la seconde position de travail (MSS).

**4.** Dispositif suivant la revendication 3, caractérisé en ce que l'élément d'espacement (136) peut pivoter parallèlement au plan de la plaque porte-tête (3) autour d'un axe prévu latéralement par rapport au dispositif à aimant de retenue et est formé de deux bras de verrouillage (136b, 136c), dont le plus long (136b) porte la seconde plaque d'armature (138) et le plus court (136c) porte le talon de retenue (135), et qu'un élément à ressort (141) est prévu pour solliciter l'élément d'espacement (136) en direction du dispositif à aimant de collage (15).

**5.** Dispositif suivant la revendication 4, caractérisé en ce que l'élément à ressort (141) est un bras en matière plastique à effet de ressort qui prend appui sur le châssis (1) de l'appareil.

**6.** Dispositif suivant la revendication 4, caractérisé en ce que le rapport de longueurs (L1/L2) du bras de retenue court au bras de retenue long (136b, 136c) est d'environ 1:2,5.

**7.** Dispositif suivant la revendication 2, caractérisé en ce que les noyaux de fer (124, 125) de l'aimant de collage (120) sont conformés en U et sont superposés, les pôles magnétiques (124c, 124d; 125c, 125d) des noyaux étant tous présents à une des faces d'about (126) et les pôles de même dénomination (124c, 125c; 124d, 125d) étant superposés par paires et à distance l'un de l'autre.

**8.** Dispositif suivant la revendication 7, caractérisé en ce que les pôles magnétiques (125c, 125d) qui coopèrent avec la seconde plaque d'armature (138) de l'élément d'espacement (136) présentent une section transversale de pôle supérieure à celle des pôles (124c, 124d) de la première plaque d'armature (131) de la plaque porte-tête (3).

**9.** Dispositif suivant la revendication 1, caractérisé en ce que la constante de temps du dispositif à aimant de collage (120) est raccourcie par l'application d'une tension plus élevée lors de la réexcitation pour la seconde plaque d'armature (138).

**10.** Dispositif suivant l'une ou l'autre des revendications 1 et 3, caractérisé en ce que les plaques d'armature (131 et 138) ainsi que le dispositif de retenue (137) sont montés sur une branche (11) de la plaque porte-tête en forme de U (3), au moins une tête magnétique (16) et les galets de cabestan (17a, 17b) étant montés sur la base de cette plaque porte-tête en forme de U (3), tandis que l'autre branche (9) peut être attaquée par un mécanisme de positionnement (14) et que la plaque porte-tête en forme de U (3) peut pivoter autour d'un point de pivotement (5) à l'encontre de la sollicitation d'un ressort de rappel (37) pour déplacer la tête magnétique (16) et les galets de cabestan (17a, 17b) vers une bande magnétique, la bande magnétique étant appliquée contre la tête magnétique (16) (position play) dans la première position de travail et étant légèrement écartée de la tête magnétique (position MSS) dans la seconde position de travail.

1
1a
1b
120
124
15
L1
L2
14
19
137
141
F
133
142
138
134
131
128
9
37a
11
18b
18a
17a
37
5
3
7
17b
16
12
13
38

Fig.1

123
120
121
125
123
124
124b
124a
b
124c
d1
122
125a
124d
125c
d2
125d
125b
126

Fig. 2

15
11
127
128
130
131
124d
124b
123
126
132
120
124a
128
129
121
124c
124
131'
134
133'
133
135
142
141
138
125d
139
125b
140
136b
121
L1
125c
125
137
136
143
144
136a
136c
L2

Fig. 3

1
1a
1b
120
133
124
135
134
138
131
128
142
141
11
14
19
9
37a
37
18b
17a
3
7
18a
17a
16
5

Fig.4

1
1a
120
14
135
133
138
131
128
134
141
142
11
37a
18a
18b
16
17a
17b
3
5
37

Fig.5

I
A
B
C
D
$I_{magn}$
1e
11 (movement)
2e
133 (movement)
$I_p$
0 1 2 3 4 5 6 7 8 9 10 11 12
t msec.
$t_0$ $t_1$ $t_2$ $t_3$ $t_4$ $t_5$ $t_6$ $t_7$

FIG.6